# EUROPÄISCHE PATENTSCHRIFT

(11) **EP 3 504 457 B1**
(45) Veröffentlichungstag und Bekanntmachung des Hinweises auf die Patenterteilung: **09.12.2020**
(21) Anmeldenummer: 17751081.5
(22) Anmeldetag: 09.08.2017
(51) Int. Cl.: F16D 65/12, F16D 65/847

(54) **WELLENBREMSSCHEIBE FÜR EIN SCHIENENFAHRZEUG**
AXLE-MOUNTED BRAKE DISK FOR A RAIL VEHICLE
DISQUE DE FREIN D'ESSIEU POUR UN VÉHICULE FERROVIAIRE

(30) Priorität: 29.08.2016 DE 102016115996
(43) Veröffentlichungstag der Anmeldung: 03.07.2019
(73) Patentinhaber: KNORR-BREMSE Systeme für Schienenfahrzeuge GmbH, 80809 München (DE)
(72) Erfinder: HÄMMERL, Bernhard, 82216 Maisach (DE); ELSTORPFF, Marc-Gregory, 80368 München (DE); SCHMID, Martin, 81245 München (DE); ARKENBERG, Nils, 81545 München (DE); VOLK, Thomas, 80803 München (DE)
(86) Internationale Anmeldenummer: PCT/EP2017/070151
(87) Internationale Veröffentlichungsnummer: WO 2018/041562

(56) Entgegenhaltungen:
- CN-U- 201 535 333
- DE-A1- 3 102 429
- DE-A1- 3 320 543
- DE-C1- 19 841 096

## Beschreibung

Die vorliegende Erfindung betrifft eine Wellenbremsscheibe für ein Schienenfahrzeug gemäß dem Oberbegriff des Anspruchs 1.

Gattungsgemäße Wellenbremsscheiben für Schienenfahrzeuge bestehen üblicherweise aus einem Gussmaterial, beispielsweise Grauguss. Dabei sind zwei parallel und abständig zueinander angeordnete Reibringe durch sich in Richtung der Drehachse der Wellenbremsscheibe erstreckende Rippen miteinander verbunden. Die Rippen sind dabei üblicherweise identisch ausgebildet. Insbesondere ist der Durchmesser der Vielzahl von die Reibringe miteinander verbindenden Rippen gleich.

Die Anordnung der Rippen zueinander ist dabei üblicherweise hinsichlich einer einfachen und möglichst fehlerfreien Gießbarkeit optimiert, um auf diese Weise die Produktionskosten gering zu halten.

Ein Nachteil der aus dem Stand der Technik bekannten Wellenbremsscheiben liegt in ihrer großen Masse. So beträgt die Masse einer solchen aus Grauguss gefertigten Wellenbremsscheibe mit einem Außendurchmesser von 590 mm, einer Breite von 170 mm, bei der die Reibringe 25,5 mm dick sind, mehr als 140 kg.

Insofern besteht der Bedarf nach modifizierten Wellenbremsscheiben mit bei gleichem Leistungsvermögen reduzierter Masse.

Wichtig für die Beibehaltung des gleichen Leistungsvermögens solcher Wellenbremsscheiben ist die Kühlleistung.

Aus der DE 198 41 096 C1 oder der CN 201 535 429 sind Scheibenbremsen mit Rippen unterschiedlichen Durchmessers bekannt.

Aufgabe der vorliegenden Erfindung ist es, eine gegenüber einer herkömmlichen Wellenbremsscheibe leichtere Wellenbremsscheibe mit gleichem Leistungsvermögen wie die Wellenbremsscheiben der gattungsgemäßen Art bereitzustellen.

Diese Aufgabe wird durch eine Wellenbremsscheibe mit den Merkmalen des Anspruchs 1 gelöst.

Wie sich unerwarteter Weise gezeigt hat, wird durch die erfindungsgemäße Ausgestaltung der Wellenbremsscheibe durch die Anpassung der Rippen, insbesondere bezüglich ihres Durchmessers, die Fertigung einer solchen massereduzierten Wellenbremsscheibe bei gleichem Leistungsvermögen ermöglicht.

Die erfindungsgemäße Wellenbremsscheibe, die zwei parallel und abständig zueinander angeordnete Reibringe aufweist, die durch eine Vielzahl von sich in Richtung der Drehachse der Reibringe erstreckenden Rippen miteinander verbunden sind, zeichnet sich dadurch aus, dass zumindest eine Teilzahl der Rippen mit voneinander verschiedenen Querschnitten ausgebildet ist, wobei der wenigstens eine Querschnitt einer ersten Teilmenge der Rippen, die als Andruckkräfte übertragende Stützelemente ausgebildet sind, einen Mindestquerschnitt nicht unterschreitet und der wenigstens eine Querschnitt einer zweiten, der Abstrahlung thermischer Energie dienenden Teilmenge der Rippen den Mindestquerschnitt unterschreitet. Der Mindestquerschnitt ist dabei durch die erforderliche Standfestigkeit gegenüber der mechanische Belastung bestimmt, die bei einem Bremsvorgang auf die beiden Reibringe ausgeübt wird und durch die Rippen aufgenommen werden muss.

Bei einer derart ausgebildeten Wellenbremsscheibe ist es aufgrund der unterschiedlichen Durchmesser der Rippen, die nun hinsichtlich ihrer Aufgabe in thermische und mechanische Rippen unterteilt sind, ermöglicht, die Packungsdichte der Rippen zu erhöhen und dadurch die Kühloberfläche zu steigern.

Die Steigerung der Kühlkanalfläche ist dabei der wesentliche Faktor zur Steigerung der Kühlleistung, so dass es durch diese Steigerung der Kühlkanalfläche ermöglicht ist, eine Wellenbremsscheibe mit einer Breite von beispielsweise 110 mm anstelle einer herkömmlichen Wellenbremsscheibe mit einer Breite von 140 mm einzusetzen, was mit einer Massereduzierung um 30 % einhergeht.

Die Massereduzierung der Wellenbremsscheibe hat den Vorteil, dass dadurch die Zuladung des Schienenfahrzeugs dementsprechend erhöht werden kann und zusätzlich der Anteil der ungefederten Massen reduziert wird.

Durch die Ausbildung einer Teilzahl der Rippen mit einem Querschnitt, der einen vorbestimmten Mindestquerschnitt nicht unterschreitet, ist es ermöglicht, diese Rippen zur Abtragung der mechanischen Belastung einzusetzen und die übrigen Rippen im Wesentlichen zur Abstrahlung thermischer Energie zu nutzen, so dass der Durchmesser dieser im Wesentlichen zur Abstrahlung thermischer Energie dienenden Rippen geringer sein kann als der Mindestquerschnitt, der zur Übertragung mechanischer Andruckkräfte notwendig wäre.

Erfindungsgemäß sind mehrere der Rippen der ersten Teilmenge radial zur Drehachse der Reibringe hintereinander angeordnet.

Auch mehrere der Rippen der zweiten Teilmenge sind radial zur Drehachse der Reibringe hintereinander angeordnet. Dies ermöglicht, dass der Sand bei der Formherstellung für die Wellenbremsscheibe die Form gut ausfüllen kann und eine qualitativ hochwertige Struktur- und Oberflächenausbildung sicherzustellen.

Die Anordnung der Rippen in solchen radialen Strahlen ermöglicht außerdem eine höhere Packungsdichte der Rippen bei vergleichbarer Formqualität als eine versetzte Rippenanordnung.

Weiter ist erfindungsgemäß die Anzahl der radial hintereinander angeordneten Rippen der zweiten Teilmenge größer als die Anzahl der radial hintereinander angeordneten Rippen der ersten Teilmenge.

So ermöglicht die Ausbildung der querschnittsreduzierten Rippen der zweiten Teilmenge die Anformung einer größeren Zahl von Rippen bei radialer Anordnung, wodurch die Kühlkanalfläche weiter vergrößert wird.

Vorteilhafte Ausführungsvarianten der Erfindung sind Gegenstand der Unteransprüche.

Um die Anordnungsfläche für die Rippen auf den zueinander zugewandten Innenseiten der Reibringe optimal zu nutzen, sind die radial angeordneten Reihen von als Stützelemente ausgebildeten Rippen und der der Abstrahlung thermischer Energie dienenden Rippen gemäß einer bevorzugten Ausführungsvariante in Umfangsrichtung alternierend nebeneinander angeordnet.

Nach einer weiteren bevorzugten Ausführungsvariante ist der Querschnitt der Rippen zumindest einer Teilmenge der Rippen zu einem Außenrand der Reibringe hin zunehmend ausgebildet.

Eine weitere Möglichkeit zur Vergrößerung der Kühlkanalfläche wird in einer weiteren bevorzugten Ausführungsvariante der Erfindung dadurch verwirklicht, dass die Länge der einem Innenrand der Reibringe nahen Rippen größer ist als die Länge der einem Außenrand der Reibringe nahen Rippen. Die Dicke der Reibringe ist dementsprechend im Bereich deren Innenrandes entsprechend reduziert ausgebildet.

Dadurch wird neben der Vergrößerung der Kühlkanalfläche auch die Lufteinströmung im Bereich des Innendurchmessers der Reibringe verbessert.

In einer besonderen Ausführungsvariante der erfindungsgemäßen Wellenbremsscheibe beträgt das Verhältnis des Querschnitts der als Stützelemente ausgebildeten Rippen zum Querschnitt der der Abstrahlung thermischer Energie dienender Rippen 3:2.

Der Querschnitt der Rippen ist dabei bevorzugt rund. Denkbar ist es auch, den Querschnitt der Rippen oval oder auch polygonal auszubilden.

Nachfolgend wird ein bevorzugtes Ausführungsbeispiel anhand der beiliegenden Zeichnungen näher erläutert.

Es zeigen:
- Fig. 1: eine schematische Schnittdarstellung eines Teilausschnitts einer Reibringinnenfläche mit sich von dieser erstreckenden Rippen,
- Fig. 2: eine schematische Schnittdarstellung eines Teilstücks der Wellenbremsscheibe in einer Schnittebene parallel und radial zur Drehachse der Wellenbremsscheibe.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Wellenbremsscheibe, Reibring, Rippe, Stützelement und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

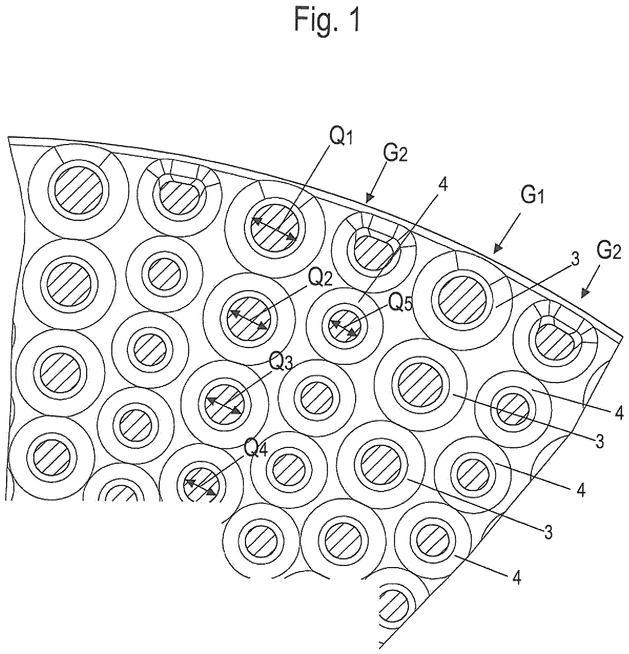

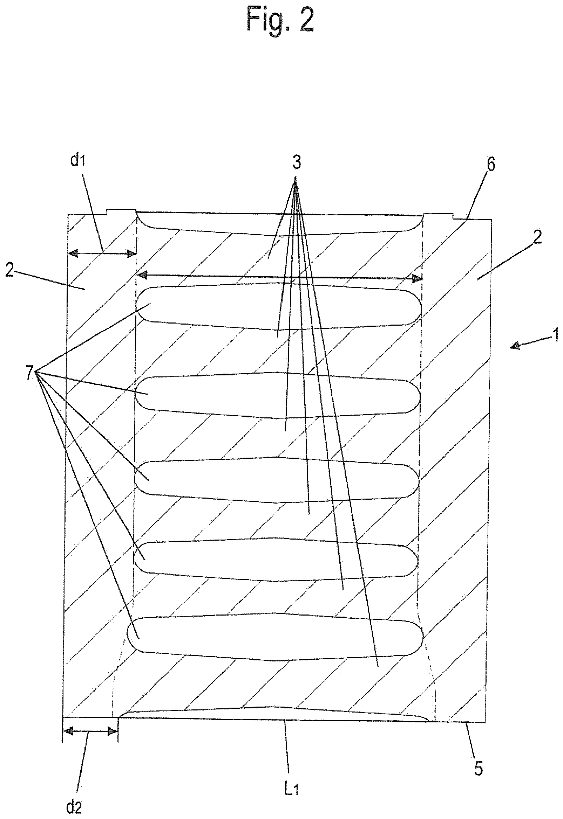

In den **Fig. 1** **und** **2** sind jeweilige Teilausschnitte einer Wellenbremsscheibe 1 für ein Schienenfahrzeug dargestellt. Die Wellenbremsscheibe 1 weist zwei parallel und abständig zueinander angeordnete Reibringe 2 auf. Die Reibringe 2 sind durch eine Vielzahl von sich in Richtung einer Drehachse und damit senkrecht zur Reibfläche der Reibringe 2 erstreckenden Rippen 3, 4 miteinander verbunden, insbesondere angegossen.

Die Wellenbremsscheibe 1 ist dabei über eines oder mehrere Verbindungselemente, beispielsweise in Gestalt von Haltelaschen oder eines Bremsscheibentopfes, mit einer ebenfalls nicht dargestellten fahrzeugseitigen Nabe oder Welle verbunden.

Wie in Fig. 1 gezeigt ist, ist eine Teilzahl der Rippen 3, 4 mit voneinander verschiedenen Querschnitten Q₁, Q₂, Q₃, Q₄, Q₅ ausgebildet. Eine Teilmenge G₁ der Rippen, die mit dem Bezugszeichen 3 versehen sind, weisen einen Querschnitt Q₁, Q₂, Q₃, Q₄ auf, der größer oder gleich einem vorbestimmten Mindestquerschnitt Qₘᵢₙ ist.

Dieser Mindestquerschnitt Qₘᵢₙ ist durch die erforderliche Standfestigkeit gegenüber der mechanische Belastung bestimmt, die bei einem Bremsvorgang auf die beiden Reibringe 2 ausgeübt wird und durch die Rippen 3 aufgenommen werden muss.

Eine zweite Gruppe von Rippen, die mit dem Bezugszeichen 4 versehen sind, dienen der Abstrahlung thermischer Energie. Der Querschnitt Q₅ dieser Rippen 4 der zweiten Teilmenge G₂ liegt unterhalb des Mindestquerschnitts Qₘᵢₙ.

Durch diese Maßnahme wird ermöglicht, die Kühlkanalfläche der Wellenbremsscheibe 1 durch Anordnung dieser aus mechanischer Sicht nicht notwendigen Rippen 4 zwischen den Reibringen 2 zu vergrößern.

Die Rippen 3 der ersten Teilmenge G₁ sind, wie in Fig. 1 dargestellt, bevorzugt radial zur Drehachse der Reibringe 2 hintereinander angeordnet.

Auch die Rippen 4 der zweiten Teilmenge G₂ sind bevorzugt so angeordnet, dass jeweils eine Reihe dieser Rippen 4 radial zur Drehachse der Reibringe 2 hintereinander angeordnet sind. Dies ermöglicht insbesondere eine einfache Formherstellung für das Gießen einer solchen Wellenbremsscheibe 1.

Wie in Fig. 1 des Weiteren beispielhaft gezeigt ist, ist die Anzahl der radial hintereinander angeordneten Rippen 4 der zweiten Teilmenge G₂ größer als die Anzahl der radial hintereinander angeordneten Rippen 3 der ersten Teilmenge G₁.

Dies wird ermöglicht durch die Ausbildung der Rippen 4 der zweiten Teilmenge G₂ mit kleinerem Querschnitt Q₅. Die so erreichte höhere Packungsdichte der Rippen 4 geht dementsprechend einher mit einer Vergrößerung der Kühlkanalfläche der Wellenbremsscheibe 1.

Zur Erreichung einer möglichst hohen Packungsdichte der Rippen 3, 4 und der damit einhergehenden großen Kühlkanalfläche sind die radial angeordneten Reihen von als Stützelemente ausgebildeten Rippen 3 und der der Abstrahlung thermischer Energie dienenden Rippen 4 in Umfangsrichtung alternierend nebeneinander angeordnet. Die Nebeneinanderanordnung der unterschiedlich ausgebildeten Rippen 3, 4 ermöglicht außerdem eine gleichmäßige Abtragung von Andruckkräften durch die als Stützelemente ausgebildeten Rippen 3.

Denkbar sind aber auch andere Anordnungsmuster der Rippen 3, 4. Wichtig ist dabei eine möglichst große Packungsdichte der Rippen 3, 4 und eine für die Übertragung von Andruckkräften auf die Reibringe 2 hinreichende Menge von als Stützelemente ausgebildeten Rippen 3.

Zur weiteren Erhöhung der Kühlkanalfläche ist, wie in Fig. 1 gezeigt ist, der Querschnitt der Rippen 3, 4 zumindest einer der Teilmengen G₁, G₂ der Rippen 3, 4 zu einem Außenrand der Reibringe 2 hin zunehmend ausgebildet. Bei der in Fig. 1 gezeigten Ausführungsvariante sind die als Stützelemente ausgebildeten Rippen 3 mit unterschiedlichen Querschnitten Q₁, Q₂, Q₃, Q₄ ausgebildet. Die zur Abstrahlung thermischer Energie dienenden Rippen 4 sind hier mit gleichbleibendem Querschnitt Q₅ ausgebildet.

In Fig. 2 ist eine weitere Möglichkeit zur Vergrößerung der Kühlkanalfläche der Wellenbremsscheibe 1 dargestellt. Wie hier gut zu erkennen ist, ist die Länge L₁ der einem Innenrand 5 der Reibringe 2 nahen Rippen 3, 4 größer als die Länge L₂ der einem Außenrand 6 der Reibringe 2 nahen Rippen 3, 4. Dementsprechend ist die Dicke d₂ der Reibringe 2 nahe deren Innenrand 5 entsprechend reduziert.

Während in Fig. 2 lediglich die beiden innersten Rippen 3 eine größere Länge aufweisen als die dem Außenrand 6 der Wellenbremsscheibe 1 nahen Rippen 3, ist es ebenso denkbar, die Dicke der Reibringe 2 so auszubilden, dass sie von der Dicke D₁ im Bereich des Außenrandes zur Dicke D₂ im Bereich des Innenrandes 5 kontinuierlich abnimmt und dementsprechend die Längen L der Rippen 3, 4 von außen nach innen kontinuierlich anwachsen.

Als besonders günstig hat sich ein Größenverhältnis des Querschnitts der als Stützelemente ausgebildeten Rippen 3 zum Querschnitt der der Abstrahlung thermischer Energie dienenden Rippen 4 von 3:2 gezeigt. So beträgt der Querschnitt der als Stützelemente ausgebildeten Rippen 3 beispielsweise 12 mm, während der Querschnitt der der Abstrahlung thermischer Energie dienenden Rippen 4 8 mm beträgt.

Die Gestalt der Querschnitte der Rippen 3, 4 ist, wie in Fig. 1 gezeigt bevorzugt rund. Denkbar ist aber auch die Ausformung von Rippen 3, 4 mit ovalem oder polygonal ausgebildetem Querschnitt.

### Bezugszeichenliste

- 1: Wellenbremsscheibe
- 2: Reibring
- 3: Rippe
- 4: Rippe
- 5: Innenrand
- 6: Außenrand

- Q: Querschnitt der Rippe
- Qₘᵢₙ: Minimalquerschnitt
- G₁: erste Gruppe
- G₂: zweite Gruppe
- L₁: Länge der Rippe
- L₂: Länge der Rippe

- d₂: Dicke der Reibringe

## Patentansprüche

1. Wellenbremsscheibe für ein Schienenfahrzeug, aufweisend zwei parallel und abständig zueinander angeordneten Reibringe (2), die durch eine Vielzahl von sich in Richtung der Drehachse der Reibringe (2) erstreckenden Rippen (3, 4) miteinander verbunden sind, wobei zumindest eine Teilzahl der Rippen (3, 4) mit voneinander verschiedenen Querschnitten (Q₁, Q₂, Q₃, Q₄, Q₅) ausgebildet ist, **dadurch gekennzeichnet, dass** der wenigstens eine Querschnitt einer ersten Teilmenge (G₁) der Rippen (3, 4), die als Andruckkräfte übertragende Stützelemente ausgebildet sind, einen Mindestquerschnitt (Qₘᵢₙ) nicht unterschreitet und der wenigstens eine Querschnitt einer zweiten, der Abstrahlung thermischer Energie dienenden Teilmenge (G₂) der Rippen (3, 4) den Mindestquerschnitt (Qₘᵢₙ) unterschreitet, wobei der Mindestquerschnitt (Qₘᵢₙ) durch die erforderliche Standfestigkeit gegenüber der mechanische Belastung bestimmt ist, die bei einem Bremsvorgang auf die beiden Reibringe (2) ausgeübt wird und durch die Rippen (3) aufgenommen werden muss, wobei mehrere der Rippen (3) der ersten Teilmenge (G₁) und mehrere der Rippen (4) der zweiten Teilmenge (G₂) radial zur Drehachse der Reibringe (2) hintereinander angeordnet sind, wobei die Anzahl der radial hintereinander angeordneten Rippen (4) der zweiten Teilmenge (G₂) größer ist als die Anzahl der radial hintereinander angeordneten Rippen (3) der ersten Teilmenge (G₁).

2. Wellenbremsscheibe nach Anspruch 1, **dadurch gekennzeichnet, dass** die radial angeordneten Reihen von als Stützelemente ausgebildeten Rippen (3) und der der Abstrahlung thermischer Energie dienenden Rippen (4) in Umfangsrichtung alternierend nebeneinander angeordnet sind.

3. Wellenbremsscheibe nach einem der vorhergehenden Ansprüche, **dadurch gekennzeichnet, dass** der Querschnitt der Rippen (3, 4) zumindest einer der Teilmengen (G₁, G₂) der Rippen (3, 4) zu einem Außenrand der Reibringe (2) hin zunehmend ausgebildet ist.

4. Wellenbremsscheibe nach einem der vorhergehenden Ansprüche, **dadurch gekennzeichnet, dass** die Länge (L₁) der einem Innenrand (5) der Reibringe (2) nahen Rippen (3, 4) größer ist als die Länge (L₂) der einem Außenrand (6) der Reibringe (2) nahen Rippen (3, 4), wobei die Dicke (d₂) der Reibringe (2) nahe deren Innenrand (5) entsprechend reduziert ist.

5. Wellenbremsscheibe nach einem der vorhergehenden Ansprüche, **dadurch gekennzeichnet, dass** das Verhältnis des Querschnitts der als Stützelemente ausgebildeten Rippen (3) zum Querschnitt der der Abstrahlung thermischer Energie dienenden Rippen (4) 3:2 beträgt.

6. Wellenbremsscheibe nach einem der vorhergehenden Ansprüche, **dadurch gekennzeichnet, dass** die Rippen (3, 4) im Querschnitt rund, oval oder polygonal ausgebildet sind.

## Claims

1. Axle-mounted brake disc for a rail vehicle, having two friction rings (2) which are arranged in parallel and spaced apart from one another, which friction rings (2) are connected to one another by way of a multiplicity of ribs (3, 4) which extend in the direction of the rotational axis of the friction rings (2), at least a part number of the ribs (3, 4) being configured with cross sections (Q₁, Q₂, Q₃, Q₄, Q₅) which are different from one another, **characterized in that** the at least one cross section of a first part quantity (G₁) of the ribs (3, 4) which are configured as supporting elements which transmit pressure forces does not undershoot a minimum cross section (Qₘᵢₙ), and the at least one cross section of a second part quantity (G₂) of the ribs (3, 4) which serves for the radiation of thermal energy undershoots the minimum cross section (Qₘᵢₙ), the minimum cross section (Qₘᵢₙ) being determined by way of the required stability with respect to the mechanical loading which is exerted on the two friction rings (2) in the case of a braking operation and has to be absorbed by way of the ribs (3), a plurality of the ribs (3) of the first part quantity (G₁) and a plurality of the ribs (4) of the second part quantity (G₂) being arranged behind one another radially with respect to the rotational axis of the friction rings (2), the number of the ribs (4) of the second part quantity (G₂) which are arranged radially behind one another being greater than the number of the ribs (3) of the first part quantity (G₁) which are arranged radially behind one another.

2. Axle-mounted brake disc according to Claim 1, **characterized in that** the radially arranged rows of ribs (3) which are configured as supporting elements and of the ribs (4) which serve for the radiation of thermal energy are arranged next to one another so as to alternate in the circumferential direction.

3. Axle-mounted brake disc according to either of the preceding claims, **characterized in that** the cross section of the ribs (3, 4) of at least one of the part quantities (G₁, G₂) of the ribs (3, 4) is configured so as to increase towards an outer edge of the friction rings (2).

4. Axle-mounted brake disc according to one of the preceding claims, **characterized in that** the length (L₁) of the ribs (3, 4) which are close to an inner edge (5) of the friction rings (2) is greater than the length (L₂) of the ribs (3, 4) which are close to an outer edge (6) of the friction rings (2), the thickness (d₂) of the friction rings (2) close to their inner edge (5) being reduced correspondingly.

5. Axle-mounted brake disc according to one of the preceding claims, **characterized in that** the ratio of the cross section of the ribs (3) which are configured as supporting elements to the cross section of the ribs (4) which serve for the radiation of thermal energy is 3:2.

6. Axle-mounted brake disc according to one of the preceding claims, **characterized in that** the ribs (3, 4) are of round, oval or polygonal configuration in cross section.

## Revendications

1. Disque de frein d'essieu d'un véhicule ferroviaire, comportant deux anneaux (2) de friction, disposés parallèlement et à distance l'un de l'autre, qui sont reliés entre eux par une pluralité de nervures (3, 4), s'étendant dans la direction de l'axe de rotation des anneaux (2) de friction, dans lequel au moins un nombre partiel des nervures (3, 4) est constitué en ayant des sections (Q1, Q2, Q3, Q4, Q5) transversales différentes les unes des autres, **caractérisé en ce que** la au moins une section transversale d'un premier sous-ensemble (G₁) des nervures (3, 4), qui sont constituées en éléments d'appui transmettant des forces de pression, n'est pas inférieure à une section (Qₘᵢₙ) transversale minimum, et la au moins une section transversale d'un deuxième sous-ensemble (G₂), servant à la dissipation de l'énergie thermique, des nervures (3, 4), est inférieure à la section transversale (Qₘᵢₙ) minimum, la section (Qₘᵢₙ) transversale minimum étant déterminée par la stabilité nécessaire à l'encontre d'une charge mécanique, qui est appliquée, lors d'un freinage, aux deux anneaux (2) de friction et qui doit être absorbée par les nervures (3), plusieurs des nervures (3) du premier sous-ensemble (G₁) et plusieurs des nervures (4) du deuxième sous-ensemble (G₂) étant disposées les unes derrière les autres radialement par rapport à l'axe de rotation des anneaux (2) de friction, le nombre des nervures (4), disposées les unes derrière les autres radialement, du deuxième sous-ensemble (G₂) étant plus grand que le nombre des nervures (4), disposées les unes derrière les autres radialement, du premier sous-ensemble (G₁).

2. Disque de frein d'essieu suivant la revendication 1, **caractérisé en ce que** les rangées disposées radialement de nervures (3) constituées en éléments d'appui et des nervures (4) servant à la dissipation de l'énergie thermique sont disposées les unes à côté des autres, en alternance, dans la direction du pourtour.

3. Disque de frein d'essieu suivant l'une des revendications précédentes, **caractérisé en ce que** la section transversale des nervures (3, 4), d'au moins l'un des sous-ensemble (G₁, G₂) des nervures (3, 4), est constituée de manière à augmenter vers un bord extérieur des anneaux (2) de friction.

4. Disque de frein d'essieu suivant l'une des revendications précédentes, **caractérisé en ce que** la longueur (L₁) des nervures (3, 4), proches d'un bord (5) intérieur des anneaux (2) de friction, est plus grande que la longueur (L₂) des nervures (3, 4), proches d'un bord (6) extérieur des anneaux (2) de friction, l'épaisseur (d₂) des anneaux (2) de friction étant réduite en conséquence, près de leur bord (5) intérieur.

5. Disque de frein d'essieu suivant l'une des revendications précédentes, **caractérisé en ce que** le rapport de la section transversale des nervures (3), constituées en éléments d'appui, à la section transversale des nervures (4) servant à la dissipation de l'énergie thermique, est de 3:2.

6. Disque de frein d'essieu suivant l'une des revendications précédentes, **caractérisé en ce que** les nervures (3, 4) sont de section transversale circulaire, ovale ou polygonale.
